(19) **Europäisches Patentamt**
**European Patent Office**
**Office européen des brevets**

(11) **EP 4 738 521 A1**

(12) **EUROPEAN PATENT APPLICATION**
published in accordance with Art. 153(4) EPC

(43) Date of publication:
06.05.2026 Bulletin 2026/19

(21) Application number: 24830291.1

(22) Date of filing: 22.05.2024

(51) International Patent Classification (IPC):
$H01M\ 10/058$ (2010.01)  $H01M\ 10/0525$ (2010.01)
$H01M\ 4/62$ (2006.01)  $H01M\ 10/0569$ (2010.01)
$H01M\ 10/0567$ (2010.01)

(52) Cooperative Patent Classification (CPC):
Y02E 60/10

(86) International application number:
PCT/CN2024/094725

(87) International publication number:
WO 2025/001643 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 CN 202310768103

(71) Applicant: Ningde Amperex Technology Limited
Ningde, Fujian 352100 (CN)

(72) Inventor: YAN, Dongyang
Ningde, Fujian 352100 (CN)

(74) Representative: Kraus & Lederer PartGmbB
Thomas-Wimmer-Ring 15
80539 München (DE)

(54) **ELECTROCHEMICAL DEVICE AND ELECTRONIC DEVICE**

(57) This application provides an electrochemical device and an electronic device, where the electrochemical device includes an electrode assembly and an electrolyte, where the electrode assembly includes a negative electrode plate, the negative electrode plate includes a negative electrode active material layer, the negative electrode active material layer includes a negative electrode active material and a negative electrode binder, the negative electrode binder includes an ester substance and a non-ester substance, and based on a mass of the negative electrode binder, a mass percentage of the ester substance is x; the electrolyte includes fluoroethylene carbonate and a high-kinetic solvent, the high-kinetic solvent includes at least one of ethyl propionate, propyl propionate, or diethyl carbonate, and a ratio of a mass percentage of fluoroethylene carbonate to a mass percentage of the high-kinetic solvent in the electrolyte is y; and the electrochemical device satisfies: $17\% \leq x+y \leq 53\%$, y is from 0.4% to 14%, and based on a mass of the electrolyte, a mass percentage of fluoroethylene carbonate is from 0.1% to 10%. By synergistically controlling x and y, this application mitigates volume expansion and capacity fade during cycling in fast-charging systems, thereby improving cycle performance.

EP 4 738 521 A1

## Description

This application claims priority to Chinese Patent Application No. 202310768103.1, filed on June 27, 2023 and entitled "ELECTROCHEMICAL DEVICE AND ELECTRONIC DEVICE", which is incorporated herein by reference in its entirety.

## TECHNICAL FIELD

This application relates to the field of electrochemical technology, and more particularly, to an electrochemical device and an electronic device.

## BACKGROUND

Electrochemical devices, such as lithium-ion secondary batteries, are widely used in fields such as smartphones, portable wearable devices, and electric vehicles due to their advantages of high energy density, high operating voltage, cycle stability, and environmental friendliness. With the continuous iterative development of consumer devices, market demands for increased charging speeds are rising, leading to an increased need for fast-charging lithium-ion secondary batteries. However, compared to traditional non-fast-charging systems, fast-charging systems exhibit more pronounced volume expansion and capacity fade during cycling. In view of this, improving the aforementioned issues in fast-charging systems and enhancing cycle performance have become urgent technical challenges for those skilled in the art.

## SUMMARY

The purpose of this application is to provide an electrochemical device and an electronic device to address volume expansion and capacity fade issues during cycling in fast-charging systems, thereby improving cycle performance. The specific technical solution is as follows:

According to a first aspect of this application, an electrochemical device is provided, including an electrode assembly and an electrolyte, where the electrode assembly includes a negative electrode plate, the negative electrode plate includes a negative electrode active material layer, the negative electrode active material layer includes a negative electrode active material and a negative electrode binder, the negative electrode binder includes an ester substance and a non-ester substance, and based on a mass of the negative electrode binder, a mass percentage of the ester substance is x; the electrolyte includes fluoroethylene carbonate (FEC) and a high-kinetic solvent, the high-kinetic solvent includes at least one of ethyl propionate (EP), propyl propionate (PP), or diethyl carbonate (DEC), and a ratio of a mass percentage of FEC to a mass percentage of the high-kinetic solvent in the electrolyte is y; and the electrochemical device satisfies: $17\% \leq x + y \leq 53\%$, y is from 0.4% to 14%, and based on a mass of the electrolyte, a mass percentage of FEC is from 0.1% to 10%. Through in-depth research, the inventor of this application has found that optimizing the combination of the negative electrode plate and the electrolyte formulation, and synergistically controlling x and y to satisfy the above relationship, can mitigate volume expansion and capacity fade issues during cycling in fast-charging systems, thereby improving cycle performance.

In some embodiments of this application, the ester substance includes at least one of isooctyl acrylate, isooctyl methacrylate, 1,3-propane sultone, diisocyanate, polyethylene glycol dimethyl ether acetate, methyl methacrylate, 2-ethylhexyl methacrylate, butyl acrylate, or phenolphthalein alcohol containing an ester group; and the non-ester substance includes at least one of butadiene, acrylonitrile, styrene, acrylic acid, hydroxymethyl cellulose, polyacrylic acid, or adiponitrile.

In some embodiments of this application, the negative electrode binder includes an acrylic substance, the acrylic substance including at least one of acrylic acid, acrylonitrile, isooctyl acrylate, isooctyl methacrylate, or butyl acrylate.

In some embodiments of this application, x is from 3% to 48%. By controlling the mass percentage of the ester substance in the negative electrode binder within the above range, volume expansion and capacity fade issues during cycling in fast-charging systems can be further mitigated, thereby improving cycle performance.

In some embodiments of this application, the electrochemical device satisfies at least one of the following: a) x is from 10% to 35%; b) y is from 3% to 13%; c) based on the mass of the electrolyte, a mass percentage of DEC in the electrolyte is from 0% to 30%; d) based on a mass of the negative electrode active material layer, a mass percentage of the negative electrode binder is from 0.5% to 5%; e) a conductivity of the electrolyte is from 7 mS/cm to 11 mS/cm; and f) $17\% \leq x + y \leq 30\%$. By controlling the above parameters, volume expansion and capacity fade issues during cycling in fast-charging systems can be further mitigated, thereby improving cycle performance.

In some embodiments of this application, the electrolyte further includes at least one of ethyl difluoroacetate, ethylene carbonate (EC), propylene carbonate (PC), 1,3-propane sultone (PS), ethylene glycol diethyl cyanide ether, butylene carbonate, dimethyl carbonate, ethyl methyl carbonate, methyl propyl carbonate, methyl acetate, ethyl acetate, propyl acetate, methyl propionate, methyl butyrate, ethyl butyrate, γ-butyrolactone, δ-valerolactone, acetonitrile, succinonitrile, adiponitrile, glutaronitrile, 1,3,6-hexanetricarbonitrile, trans-hexenedinitrile, ethylene glycol bis(propionitrile) ether, or hexafluorocyclotriphosphazene.

In some embodiments of this application, the negative electrode binder includes at least one of styrene-butadiene rubber, polyacrylic acid, polyvinyl acetate, or polyvinyl alcohol.

In some embodiments of this application, the negative electrode active material layer further includes a negative electrode conductive agent and a dispersant, and based on a mass of the negative electrode active material layer, a mass percentage of the negative electrode active material is from 88% to 99%, a mass percentage of the negative electrode conductive agent is from 0% to 2%, and a mass percentage of the dispersant is from 0.5% to 5%.

In some embodiments of this application, the negative electrode active material includes at least one of natural graphite, artificial graphite, lithium titanate, hard carbon, nano-silicon, silicon-carbon, or silicon-oxygen; the negative electrode conductive agent includes at least one of conductive carbon spheres, acetylene black, conductive carbon black, Ketjen black, single-walled carbon nanotubes, multi-walled carbon nanotubes, nano-carbon fibers, graphene, or conductive graphite sheets; and the dispersant includes at least one of lithium carboxymethyl cellulose, sodium carboxymethyl cellulose, or modified carboxymethyl cellulose.

In some embodiments of this application, the negative electrode active material includes artificial graphite, where a ratio of a D-peak intensity to a G-peak intensity of the artificial graphite, as measured by Raman spectroscopy, is from 0.1 to 0.6.

According to a second aspect of this application, an electronic device is provided, which includes the electrochemical device provided in the first aspect of this application.

Beneficial effects of this application:

this application provides an electrochemical device and an electronic device. The electrochemical device includes an electrode assembly and an electrolyte, where the electrode assembly includes a negative electrode plate, the negative electrode plate includes a negative electrode active material layer, the negative electrode active material layer includes a negative electrode active material and a negative electrode binder, the negative electrode binder includes an ester substance and a non-ester substance, and based on a mass of the negative electrode binder, a mass percentage of the ester substance is $x$; the electrolyte includes FEC and a high-kinetic solvent, the high-kinetic solvent includes at least one of EP, PP, or DEC, a ratio of a mass percentage of FEC to a mass percentage of the high-kinetic solvent in the electrolyte is $y$; and the electrochemical device satisfies: $17\% \leq x + y \leq 53\%$, $y$ is from 0.4% to 14%, and based on a mass of the electrolyte, a mass percentage of FEC is from 0.1% to 10%. By optimizing the proportion of ester components in the negative electrode binder and solvent components in the electrolyte, and synergistically controlling $x$ and $y$ to satisfy the above relationship, this application mitigates volume expansion and capacity fade issues during cycling in fast-charging systems, improves cycle performance, and achieves good high-temperature storage performance.

It is not necessary for any product or method implementing this application to achieve all the advantages described above simultaneously.

## DETAILED DESCRIPTION

The technical solutions in embodiments of this application are described clearly and completely below in conjunction with some embodiments of this application. Obviously, the described embodiments are only a part of the embodiments of this application, not all embodiments. All other embodiments obtained by those skilled in the art based on this application fall within the scope of protection of this application.

It should be noted that, in the specific embodiments of this application, a lithium-ion secondary battery is used as an example of the electrochemical device to explain this application, but the electrochemical device of this application is not limited to lithium-ion secondary batteries.

According to a first aspect of this application, an electrochemical device is provided, which includes an electrode assembly and an electrolyte, where the electrode assembly includes a negative electrode plate, the negative electrode plate includes a negative electrode active material layer, the negative electrode active material layer includes a negative electrode active material and a negative electrode binder, the negative electrode binder includes an ester substance and a non-ester substance, and based on a mass of the negative electrode binder, a mass percentage of the ester substance is $x$; the electrolyte includes FEC and a high-kinetic solvent, the high-kinetic solvent includes at least one of EP, PP, or DEC, and a ratio of a mass percentage of FEC to a mass percentage of the high-kinetic solvent in the electrolyte is $y$; and the electrochemical device satisfies: $17\% \leq x + y \leq 53\%$, $y$ is from 0.4% to 14%, and based on a mass of the electrolyte, a mass percentage of FEC is from 0.1% to 10%. In some embodiments, $17\% \leq x + y \leq 30\%$. In some embodiments, $y$ is from 3% to 13%. For example, $x + y$ may be 17%, 20%, 25%, 30%, 35%, 40%, 50%, 53%, or any range therebetween; $y$ may be 0.4%, 1%, 4%, 7%, 10%, 14%, or any range therebetween; the mass percentage of FEC may be 0.1%, 2%, 4%, 6%, 8%, 10%, or any range therebetween. The inventor of this application has found through research that when $y$ is too low, for example, less than 0.4%, the electrochemical device exhibits poor cycle performance due to gas swelling after cycling; when $y$ is too high, for example, greater than 14%, the electrochemical device experiences severe swelling during high-temperature storage, with gas swelling phenomena, and the storage swelling rate exceeds the required 10%, resulting in deteriorated high-temperature storage performance. Controlling y within the range of this application helps mitigate volume expansion and capacity fade issues during cycling in fast-charging systems, improving cycle performance while maintaining good high-temperature storage performance. In this application, the contents of the ester substance and non-ester substance are tested using a pyrolysis-gas chromatography-mass spectrometry (PY-GCMS) instrument.

In some embodiments of this application, based on the mass of the electrolyte, the mass percentage of the high-kinetic solvent is from 35% to 55%. For example, the mass percentage of the high-kinetic solvent may be 35%, 40%, 45%, 50%, 55%, or any range therebetween. Including the high-kinetic solvent within the above range and controlling the content thereof within the above range enables the electrolyte to have lower viscosity and higher conductivity, facilitating ion migration in the electrolyte, resulting in stable positive and negative electrode interfaces in the electrochemical device, and further help mitigate volume expansion and capacity fade issues during cycling in fast-charging systems, thereby improving cycle performance.

In some embodiments of this application, the ester substance includes at least one of isooctyl acrylate, isooctyl methacrylate, 1,3-propane sultone, diisocyanate, polyethylene glycol dimethyl ether acetate, methyl methacrylate, 2-ethylhexyl methacrylate, butyl acrylate, or phenolphthalein alcohol containing an ester group, where the ester substance may be produced by pyrolysis during testing with a pyrolysis-gas chromatography-mass spectrometry instrument or introduced during the preparation of the negative electrode binder. The non-ester substance includes at least one of butadiene, acrylonitrile, styrene, acrylic acid, hydroxymethyl cellulose, polyacrylic acid, or adiponitrile.

In fast-charging electrochemical device systems, solvents with low viscosity and high dielectric constant are commonly used to improve kinetic behavior, while styrene-based negative electrode binders with better kinetic behavior are introduced to enhance the high-rate charge-discharge performance of the electrochemical device. However, in such cases, the consistency of the solid electrolyte interphase (SEI) film formed by the electrolyte on the negative electrode graphite surface is poor, and the affinity and adhesion with the negative electrode binder are insufficient, leading to deterioration of the adhesion and conductive network within the SEI film during cycling, resulting in more pronounced swelling and more severe capacity fade in the electrochemical device. In this application, a fast-charging electrochemical device refers to an electrochemical device capable of charging to ≥60% state of charge within 30 minutes.

The inventor of this application has found through research that, in fast-charging electrochemical systems, when the negative electrode binder incorporates a certain amount of ester substances, it is more likely to form weak bonds and interactions with organic components on the SEI film surface, maintaining an intact conductive network within the negative electrode plate during cycling. Additionally, increasing the proportion of FEC solvent relative to the fast-charging solvent in the electrolyte can improve the film-forming stability on the graphite surface, ensuring that the weak bond interactions with the negative electrode binder can be sustained on the negative electrode surface over the long term, avoiding the loss of the initially formed robust negative electrode plate structure in cycling due to repeated breakdown and reformation of an unstable SEI film as the underlying substrate (that is, the SEI film on the graphite surface) is damaged. The synergistic effect of these two aspects enhances the affinity between the negative electrode binder and the SEI interface on the graphite surface, thereby mitigating volume expansion and capacity fade issues during cycling in fast-charging systems and improving cycle performance.

The presence of ester substances in the negative electrode binder is due to the addition of solvents, cross-linking agents, and other modifying additives, in addition to mixing the main raw materials (for example, styrene-butadiene rubber SBR, polyvinyl alcohol PVA, and polyacrylic acid PAA) and lithium sources (for example, lithium carbonate) in specific proportions during the preparation of the negative electrode binder. These modifying additives include conductive agents, nano-fillers, surfactants, antioxidants, flexible additives, and the like, covering inorganic substance, metal oxides, organic polymers, polymer-metal compounds, and the like. The cross-linking agent facilitates a cross-linking reaction upon heating to form a cross-linked network, thereby forming the negative electrode binder. The modifying additives are used to improve specific properties of the negative electrode binder. During the addition of the cross-linking agents and modifying monomers, a certain proportion of ester substances required by this invention can be introduced, including at least one of isooctyl acrylate, isooctyl methacrylate, 1,3-propane sultone, butyl acrylate, diisocyanate, polyethylene glycol dimethyl ether acetate, methyl methacrylate, 2-ethylhexyl methacrylate, or phenolphthalein alcohol containing an ester group. These ester substances may be added during the preparation of the negative electrode binder or produced by pyrolysis of the negative electrode binder.

In some embodiments of this application, the negative electrode binder includes an acrylic substance, the acrylic substance including at least one of acrylic acid, acrylonitrile, isooctyl acrylate, isooctyl methacrylate, or butyl acrylate. In this application, the content of the acrylic substance is tested using a pyrolysis-gas chromatography-mass spectrometry instrument.

In this application, the preparation method of the negative electrode binder is not particularly limited, as long as it achieves the purpose of this invention. For example, methods such as emulsion polymerization and solution polymerization can be used to prepare the negative electrode binder of this application.

In some embodiments of this application, x is from 3% to 48%. For example, x may be 3%, 10%, 20%, 30%, 40%, 48%, or any range therebetween. Controlling x within the range of this application reduces gas swelling of the electrochemical device after cycling on the one hand, and enables effective cross-linking reactions during the synthesis of the negative electrode binder on the other hand. This helps mitigate volume expansion and capacity fade issues during cycling in fast-charging systems, thereby improving cycle performance. Preferably, x is from 10% to 35%.

In some embodiments of this application, based on the mass of the electrolyte, a mass percentage of DEC in the electrolyte is from 0% to 30%. For example, the mass percentage of DEC may be 0%, 5%, 10%, 15%, 20%, 25%, 30%, or any range therebetween. Controlling the content of DEC in the electrolyte within the above range enables the electrolyte to have lower viscosity and higher conductivity, facilitating ion migration in the electrolyte, resulting in stable positive and negative electrode interfaces in the electrochemical device, and further help mitigate volume expansion and capacity fade issues during cycling in fast-charging systems, thereby improving cycle performance.

In some embodiments of this application, based on a mass of the negative electrode active material layer, a mass percentage of the negative electrode binder is from 0.5% to 5%. For example, the mass percentage of the negative electrode binder may be 0.5%, 1%, 2%, 3%, 4%, 5%, or any range therebetween.

In some embodiments of this application, a conductivity of the electrolyte is from 7 mS/cm to 11 mS/cm. For example, the conductivity may be 7 mS/cm, 8 mS/cm, 9 mS/cm, 10 mS/cm, 11 mS/cm, or any range therebetween. Controlling the conductivity within the above range facilitates ion migration in the electrolyte, thereby helping to mitigate volume expansion and capacity fade issues during cycling in fast-charging systems and improving cycle performance.

In some embodiments of this application, the electrolyte further includes another compound, the another compound including at least one of ethyl difluoroacetate, ethylene carbonate (EC), propylene carbonate (PC), 1,3-propane sultone (PS), ethylene glycol diethyl cyanide ether, butylene carbonate, dimethyl carbonate, ethyl methyl carbonate, methyl propyl carbonate, methyl acetate, ethyl acetate, propyl acetate, methyl propionate, methyl butyrate, ethyl butyrate, $\gamma$-butyrolactone, $\delta$-valerolactone, acetonitrile, succinonitrile, adiponitrile, glutaronitrile, 1,3,6-hexanetricarbonitrile, trans-hexenedinitrile, ethylene glycol bis(propionitrile) ether, or hexafluorocyclotriphosphazene. Based on the mass of the electrolyte, a mass percentage of the another compound in the electrolyte is from 30% to 50%. For example, the mass percentage of the another compound may be 30%, 35%, 40%, 45%, 50%, or any range therebetween. Including the above the another compound in the electrolyte and controlling the content thereof within the above range enables the electrolyte to have lower viscosity and higher conductivity, facilitating ion migration in the electrolyte, resulting in stable positive and negative electrode interfaces in the electrochemical device, and further help mitigate volume expansion and capacity fade issues during cycling in fast-charging systems, thereby improving cycle performance.

In this application, the electrolyte further includes a lithium salt, and the type of lithium salt is not particularly limited, as long as it achieves the purpose of this application. For example, the lithium salt may include, but is not limited to, at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, lithium bis(oxalate)borate, or lithium difluoroborate. Preferably, the lithium salt includes $LiPF_6$.

In some embodiments of this application, based on the mass of the electrolyte, a mass percentage of the lithium salt is from 10% to 20%. For example, the mass percentage of the lithium salt may be 10%, 12%, 14%, 16%, 18%, 20%, or any range therebetween.

In some embodiments of this application, the negative electrode binder includes at least one of styrene-butadiene rubber, polyacrylic acid, polyvinyl acetate, or polyvinyl alcohol.

In some embodiments of this application, the negative electrode active material layer further includes a negative electrode conductive agent and a dispersant, and based on a mass of the negative electrode active material layer, a mass percentage of the negative electrode active material is from 88% to 99%, for example, the mass percentage of the negative electrode active material may be 88%, 90%, 92%, 94%, 96%, 99%, or any range therebetween. A mass percentage of the negative electrode conductive agent is from 0% to 2%, for example, the mass percentage of the negative electrode conductive agent may be 0%, 0.4%, 0.8%, 1.2%, 1.6%, 2%, or any range therebetween. A mass percentage of the dispersant is from 0.5% to 5%, for example, the mass percentage of the dispersant may be 0.5%, 1%, 2%, 3%, 4%, 5%, or any range therebetween.

In some embodiments of this application, the negative electrode active material includes at least one of natural graphite, artificial graphite, lithium titanate, hard carbon, nano-silicon, silicon-carbon, or silicon-oxygen; the negative electrode conductive agent includes at least one of conductive carbon spheres, acetylene black, conductive carbon black, Ketjen black, single-walled carbon nanotubes, multi-walled carbon nanotubes, nano-carbon fibers, graphene, or conductive graphite sheets; and the dispersant includes at least one of lithium carboxymethyl cellulose, sodium carboxymethyl cellulose, or modified carboxymethyl cellulose.

In some embodiments of this application, the negative electrode active material includes artificial graphite, where a ratio of a D-peak intensity to a G-peak intensity of the artificial graphite, as measured by Raman spectroscopy, is from 0.1 to 0.6. For example, the D-peak intensity to G-peak intensity ratio may be 0.1, 0.2, 0.3, 0.4, 0.5, 0.6, or any range therebetween.

The negative electrode current collector in this application is not particularly limited, as long as it achieves the purpose of this application. For example, it may include copper foil, copper alloy foil, nickel foil, stainless steel foil, titanium foil, nickel foam, copper foam, or a composite current collector (for example, lithium-copper composite current collector, carbon-copper composite current collector, nickel-copper composite current collector, titanium-copper composite current collector, and the like). In this application, a thickness of the negative electrode current collector is not particularly limited, as long as it achieves the purpose of this application, for example, the thickness may be from 4 $\mu$m to 12 $\mu$m.

Optionally, the negative electrode may further include a conductive layer, the conductive layer being located between the negative electrode current collector and the negative electrode active material layer. The composition of the conductive layer in this application is not particularly limited and may be a conductive layer commonly used in the art.

The positive electrode plate in this application is not particularly limited, as long as it achieves the purpose of this application. The positive electrode plate typically includes a positive electrode current collector and a positive electrode active material layer, the positive electrode active material layer including a positive electrode active material. The positive electrode current collector is not particularly limited and may be any positive electrode current collector known in the art, such as copper foil, aluminum foil, aluminum alloy foil, or a composite current collector (for example, aluminum-carbon composite current collector). The positive electrode active material is not particularly limited and may be any positive electrode active material known in the art, for example, the positive electrode active material may include, but is not limited to, at least one of lithium nickel cobalt manganese oxide (for example, NCM811, NCM622, NCM523, NCM111), lithium nickel cobalt aluminate, lithium iron phosphate, lithium-rich manganese-based materials, lithium cobalt oxide ($LiCoO_2$), lithium manganese oxide, lithium manganese iron phosphate, or lithium titanate.

In this application, the thicknesses of the positive electrode current collector and the positive electrode active material layer are not particularly limited, as long as the purpose of this application can be achieved. For example, the thickness of the positive electrode current collector may be from 8 $\mu$m to 12 $\mu$m, and the thickness of the positive electrode active material layer may be from 30 $\mu$m to 120 $\mu$m.

In this application, the positive electrode active material layer may further include a positive electrode conductive agent, and the positive electrode conductive agent is not particularly limited, as long as the purpose of this application can be achieved. For example, the positive electrode conductive agent may include, but is not limited to, at least one of conductive carbon black (Super P), carbon nanotubes (CNTs), carbon fibers, flake graphite, Ketjen black, graphene, a metal material, or a conductive polymer. The carbon nanotubes may include, but are not limited to, single-walled carbon nanotubes and/or multi-walled carbon nanotubes. The carbon fibers may include, but are not limited to, vapor-grown carbon fibers (VGCF) and/or nano-carbon fibers. The metal material may include, but is not limited to, metal powder and/or metal fibers, specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole.

In this application, the positive electrode active material layer may further include a positive electrode binder, and the positive electrode binder is not particularly limited, as long as the purpose of this application can be achieved. For example, the positive electrode binder may include, but is not limited to, polyvinyl alcohol, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, or nylon.

Optionally, the positive electrode may further include a conductive layer, the conductive layer being located between the positive electrode current collector and the positive electrode active material layer. The composition of the conductive layer in this application is not particularly limited and may be a conductive layer commonly used in the art, for example, the conductive layer may include, but is not limited to, the above positive electrode conductive agent and the above positive electrode binder.

The separator in this application is not particularly limited, as long as the purpose of this application can be achieved. The separator may include a substrate layer and a surface treatment layer. The substrate layer is not particularly limited. For example, the material of the separator may include, but is not limited to, at least one of polyolefins (PO) mainly composed of polyethylene (PE) or polypropylene (PP), polyester (for example, polyethylene terephthalate (PET) film), cellulose, polyimide (PI), polyamide (PA), spandex, or aramid. The type of separator may include at least one of woven membranes, non-woven membranes, microporous membranes, composite membranes, rolled membranes, or spun membranes. The separator in this application may have a porous structure, and the pore size is not particularly limited, as long as the purpose of this application can be achieved, for example, the pore size may be from 0.01 $\mu$m to 1 $\mu$m. In this application, the thickness of the separator is not particularly limited, as long as the purpose of this application can be achieved, for example, the thickness may be from 3 $\mu$m to 16 $\mu$m.

In this application, at least one surface of the substrate layer may further be provided with a surface treatment layer, and the surface treatment layer is not particularly limited. It may be a polymer layer, an inorganic layer, or a layer formed by mixing a polymer and an inorganic substance. The inorganic layer may include, but is not limited to, inorganic particles and an inorganic layer binder. The inorganic particles are not particularly limited and may include, but are not limited to, at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic layer binder is not particularly limited and may include, but is not limited to, at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and the polymer material may include, but is not limited to, at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

The preparation process of the electrochemical device is well known to those skilled in the art and is not particularly limited in this application. For example, it may include, but is not limited to, the following steps: stacking a positive electrode plate, a separator, and a negative electrode plate in order, and performing operations such as winding or folding as needed to obtain an electrode assembly with a wound structure, placing the electrode assembly in a packaging bag, injecting the electrolyte into the packaging bag, and sealing to obtain the electrochemical device; alternatively, stacking a positive electrode plate, a separator, and a negative electrode plate in order, fixing the four corners of the entire stacked structure with tape to obtain an electrode assembly with a stacked structure, placing the electrode assembly in a packaging bag, injecting the electrolyte into the packaging bag, and sealing to obtain the electrochemical device. Additionally, overcurrent protection elements, guide plates, and the like, may be placed in the packaging bag as needed to prevent pressure buildup, overcharging, or overdischarging inside the electrochemical device.

According to a second aspect of this application, an electronic device is provided, which includes the electrochemical device according to any of the foregoing embodiments of this application. The electrochemical device provided in this application can mitigate volume expansion and capacity fade issues during cycling in fast-charging systems, improving cycle performance, thereby providing the electronic device of this application with a longer service life and good performance.

The electronic device in this application is not particularly limited and may be any electronic device known in the prior art. In some embodiments, the electronic device may include, but is not limited to, notebook computers, pen-input computers, mobile computers, e-book readers, portable phones, portable fax machines, portable copiers, portable printers, head-mounted stereo headphones, video recorders, LCD TVs, portable cleaners, portable CD players, mini-disc players, transceivers, electronic notebooks, calculators, memory cards, portable recorders, radios, backup power supplies, motors, automobiles, motorcycles, electric bicycles, bicycles, lighting fixtures, toys, gaming consoles, clocks, power tools, flashlights, cameras, large household batteries, and lithium-ion capacitors.

Examples

The examples and comparative examples below are provided to further illustrate the implementation of this application. Various tests and evaluations are conducted according to the methods described below. Unless otherwise specified, "parts" and "%" are based on mass.

Test methods and equipment:

Negative electrode binder composition test:

The lithium-ion secondary battery was discharged to 3.0 V at a current of 0.2C, and this step was repeated three times to prevent voltage rebound. In a dry room (water percentage < 2%), the lithium-ion secondary battery was disassembled, the negative electrode plate was removed, and the negative electrode plate was soaked in dimethyl carbonate (DMC) solvent for 12 h (the liquid completely submerging the negative electrode plate), after which the solvent was discarded. The negative electrode plate was then soaked again in DMC solvent for 12 h (the liquid completely submerging the negative electrode plate), and the solvent was discarded after soaking. After the soaking process, the negative electrode plate was dried in an oven at 60 °C. The dried negative electrode plate was sampled and tested using a pyrolysis-gas chromatography-mass spectrometry instrument with the following parameters: Agilent 7890B/5977B; detector: mass selective detector (MSD); injector: pyrolyzer EGA/PY-3030D; column oven temperature: 40 °C to 320 °C; and pyrolyzer temperature: 40 °C to 1000 °C.

Electrolyte composition test:

The lithium-ion secondary battery was discharged to 3.0 V at a current of 0.2C, and this step was repeated three times to prevent voltage rebound. In a dry room (water content < 2%), the lithium-ion secondary battery was disassembled, the electrode assembly and electrolyte portion were removed and quickly placed into a centrifuge tube, and centrifugation was performed at 3200 rpm for 20 to 30 minutes in a centrifuge. After centrifugation, the centrifuge was opened, the centrifuge tube was removed, and the obtained electrolyte was transferred into a sample vial using a syringe. The sample was then injected into a pyrolysis-gas chromatography-mass spectrometry instrument for testing under the following parameters: Agilent 8890-5977B; detector: mass selective detector (MSD); injector: Agilent G4513A autosampler; and column oven temperature: 40 °C to 270 °C.

25°C lithium-ion secondary battery swelling and cycle test method:

(1) The lithium-ion secondary battery was allowed to stand at 25°C for 10 minutes. The initial thickness was measured using a 600 g PPG thickness gauge, and this value was defined as the 25°C cycle swelling baseline value (0%).

(2) Charging process: The battery was charged at a constant current of 2.6C to 4.2 V, followed by constant-voltage charging until the current decreased to 2.35C. It was then charged at a constant current of 2.35C to 4.25 V, followed by constant-voltage charging until 2C; charged at a constant current of 2C to 4.3 V, followed by constant-voltage charging until 1.5C; charged at a constant current of 1.5C to 4.38 V, followed by constant-voltage charging until 1.2C; charged at a constant current of 1.2C to 4.45 V, followed by constant-voltage charging until 1C; and finally charged at a constant current of 1C to 4.48 V, followed by constant-voltage charging until 0.1C.

(3) The battery was allowed to stand for 10 minutes.

(4) Discharging process: In the first cycle and every 50th cycle thereafter (1, 51, 101, 151, ..., 1001), the battery was discharged at a constant current of 0.2C to 3 V; in other cycles, it was discharged at a constant current of 1C to 3 V.

(5) The battery was allowed to stand for 10 minutes. The charging and discharging processes of the lithium-ion secondary battery described in steps (2) to (5) were repeated for 1001 cycles. The discharge capacity was recorded for each cycle.

(6) After cycling, the lithium-ion secondary battery was charged according to the procedure in step (2) to reach a fully charged state, after which the 600g PPG thickness was measured. This value was recorded as the fully charged thickness of the lithium-ion secondary battery after the 1001st cycle.

The 25°C cycle swelling rate, 25°C 0.2C capacity retention rate, 25°C 1C capacity retention rate, and 25°C cycle capacity loss were calculated by using the following expressions:

25°C cycle swelling rate = ((fully charged thickness of the lithium-ion secondary battery after the 1001st cycle / 25°C cycle swelling baseline value) - 1) $\times$ 100%;

25°C 0.2C capacity retention rate = (discharge capacity after the 1001st cycle / discharge capacity after the 1st cycle) $\times$ 100%;

25°C 1C capacity retention rate = (discharge capacity after the 1000th cycle / discharge capacity after the 1st cycle) $\times$ 100%;

25°C cycle capacity loss = 25°C 0.2C capacity retention rate - 25°C 1C capacity retention rate.

80°C Storage swelling test method:

(1) The lithium-ion secondary battery was allowed to stand at 25°C for 1 h.

(2) Charging process: The battery was charged at a constant current of 2.6C to 4.2 V, then charged at a constant voltage to 2.35C; charged at a constant current of 2.35C to 4.25 V, then charged at a constant voltage to 2C; charged at a constant current of 2C to 4.3 V, then charged at a constant voltage to 1.5C; charged at a constant current of 1.5C to 4.38 V, then charged at a constant voltage to 1.2C; charged at a constant current of 1.2C to 4.45 V, then charged at a constant voltage to 1C; and charged at a constant current of 1C to 4.48 V, then charged at a constant voltage to 0.1C. The 600g PPG thickness of the lithium-ion secondary battery was measured and this value was defined as the swelling baseline value (0%).

(3) The lithium-ion secondary battery was allowed to stand at 80°C for 7 h, then immediately removed and the 600g PPG thickness was measured, recorded as the thickness of the lithium-ion secondary battery after 80°C storage.

The 80°C high-temperature storage swelling rate was calculated using the following expression:

80°C high-temperature storage swelling rate = ((thickness of the lithium-ion secondary battery after 80°C storage / swelling baseline value) - 1) × 100%.

Electrolyte conductivity test:

The lithium-ion secondary battery was discharged to 3.0 V at a current of 0.2C, this step was repeated three times to prevent voltage rebound. In a dry room (water content < 2%), the outer packaging bag of the lithium-ion secondary battery was cut open, placed with the opening facing downward in a centrifuge tube, centrifuged at 3200 rpm for 20 to 30 minutes in a centrifuge, then the centrifuge was opened, the centrifuge tube was removed, and the obtained electrolyte was transferred to a sample vial using a syringe. The conductivity of the electrolyte was measured using a Leici conductivity meter.

Example 1

<Preparation of negative electrode binder>

The solutes acrylonitrile, phenolphthalein alcohol, styrene, and butadiene were mixed in a mass ratio of 3:17:25:55 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

<Preparation of negative electrode plate>

Artificial graphite (with a D-peak intensity to G-peak intensity ratio of 0.5 as measured by Raman spectroscopy), negative electrode binder, and dispersant lithium carboxymethyl cellulose were mixed in a mass ratio of 97.5:1.4:1.1, deionized water was added as a solvent to prepare a slurry with a solid content of 70 wt%, and the mixture was stirred uniformly. The slurry was evenly coated on one surface of an 8 $\mu$m thick copper foil, dried at 110°C, and cold-pressed to obtain a negative electrode plate with a negative electrode active material layer thickness of 110 $\mu$m. The coating process was repeated on the other surface of the copper foil to obtain a negative electrode plate with a negative electrode active material layer coated on both sides. The negative electrode plate was cut to dimensions of 75.5 mm × 867 mm and tabs were welded for use.

<Preparation of positive electrode plate>

Lithium cobalt oxide (LiCoO$_2$) as the positive electrode active material, acetylene black as the positive electrode conductive agent, and polyvinylidene fluoride (PVDF) as the positive electrode binder were mixed in a mass ratio of 97:1.5:1.5, N-methylpyrrolidone (NMP) was added as a solvent, and the mixture was stirred under a vacuum mixer to form a uniform positive electrode slurry with a solid content of 75 wt%. The slurry was evenly coated on a 9 $\mu$m thick aluminum foil positive electrode current collector, dried at 85°C, and cold-pressed to obtain a positive electrode plate with a positive electrode active material layer thickness of 88 $\mu$m. The above steps were repeated on the other surface of the aluminum foil to obtain a positive electrode plate with a positive electrode active material layer coated on both sides. The positive electrode plate was cut to dimensions of 74 mm × 867 mm and tabs were welded for use.

<Preparation of electrolyte>

In an argon atmosphere glovebox with a water content of less than 10 ppm, FEC, high-kinetic solvents, and other compounds were mixed uniformly to obtain a base solvent. The high-kinetic solvents included EP, PP, and DEC, and the other compounds included PC, EC, PS, succinonitrile, adiponitrile, ethylene glycol diethyl cyanide ether, and 1,3,6-hexanetricarbonitrile. The mass ratio of FEC:EP:PP:DEC:PC:EC:PS:succinonitrile:adiponitrile:ethylene glycol diethyl cyanide ether:1,3,6-hexanetricarbonitrile was 0.3:15.8:23.6:7.9:18.4:9.6:2.6:1.1:1.9:0.4:5.9. Lithium salt LiPF$_6$ was added to the base solvent and mixed uniformly to obtain the electrolyte, where the mass percentage of LiPF$_6$ was 12.5%, with the remainder being the base solvent.

<Preparation of separator>

A 7 $\mu$m thick polyethylene (PE) porous polymer film was used as the separator.

<Preparation of lithium-ion secondary battery>

The positive electrode plate, separator, and negative electrode plate were stacked in order, with the separator positioned between the positive and negative electrode plates for isolation, and wound to obtain a bare lithium-ion secondary battery. The bare lithium-ion secondary battery was placed in an outer packaging foil, the prepared electrolyte was injected into the dried lithium-ion secondary battery, and vacuum sealing, standing, formation, and shaping processes were performed to complete the preparation of the lithium-ion secondary battery.

Example 2

Except for in <Preparation of electrolyte>, adjusting the mass percentage of each component in the electrolyte base solvent as shown in Table 1, with the mass percentage of the lithium salt unchanged, the rest was the same as in Example 1.

Example 3

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, 1,3-propane sultone, styrene, and butadiene were mixed in a mass ratio of 3:17:25:55 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 4

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, diisocyanate, styrene, and butadiene were mixed in a mass ratio of 3:17:25:55 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 5

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, polyethylene glycol dimethyl ether acetate, styrene, and butadiene were mixed in a mass ratio of 3:17:25:55 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 6

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, 2-ethylhexyl methacrylate, styrene, and butadiene were mixed in a mass ratio of 3:17:25:55 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Examples 7 to 12

Except for in <Preparation of electrolyte>, adjusting the mass percentage of each component in the electrolyte base solvent as shown in Table 1, with the mass percentage of the lithium salt unchanged, the rest was the same as in Example 1.

Example 13

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, phenolphthalein alcohol, styrene, and butadiene were mixed in a mass ratio of 2.5:17.5:25:55 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 14

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, phenolphthalein alcohol, styrene, and butadiene were mixed in a mass ratio of 2:18:25:55 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 15

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, isooctyl acrylate, styrene, and butadiene were mixed in a mass ratio of 3:22:23:52 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 16

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes phenolphthalein alcohol, styrene, and butadiene were mixed in a mass ratio of 35:20:45 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 17

Except for in <Preparation of electrolyte>, adjusting the mass percentage of each component in the electrolyte base solvent as shown in Table 1, with the mass percentage of the lithium salt unchanged, the rest was the same as in Example 15.

Example 18

Except for in <Preparation of negative electrode binder> and <Preparation of electrolyte>, adjusting the mass percentage of each component in the electrolyte base solvent as shown in Table 1, with the mass percentage of the lithium salt unchanged, the rest was the same as in Example 16.

Example 19

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes phenolphthalein alcohol, styrene, and butadiene were mixed in a mass ratio of 50:15:35 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 20

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes phenolphthalein alcohol, styrene, and butadiene were mixed in a mass ratio of 7:28:65 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Example 21

Except for in <Preparation of electrolyte>, adjusting the mass percentage of each component in the electrolyte base solvent as shown in Table 1, with the mass percentage of the lithium salt unchanged, the rest was the same as in Example 1.

Example 22

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, methyl methacrylate, butyl acrylate, styrene, and butadiene were mixed in a mass ratio of 1.5:2.0:1.0:86.6:8.9 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Examples 23 to 24

Except for in <Preparation of electrolyte>, adjusting the mass percentage of each component in the electrolyte base solvent as shown in Table 1, with the mass percentage of the lithium salt unchanged, the rest was the same as in Example 14.

Comparative examples 1 to 3

Except for in <Preparation of electrolyte>, adjusting the mass percentage of each component in the electrolyte base solvent as shown in Table 1, with the mass percentage of the lithium salt unchanged, the rest was the same as in Example 1.

Comparative example 4

Except for in <Preparation of electrolyte>, adjusting the mass percentage of each component in the electrolyte base solvent as shown in Table 1, with the mass percentage of the lithium salt unchanged, the rest was the same as in Example 20.

Comparative example 5

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, methyl methacrylate, butyl acrylate, styrene, and butadiene were mixed in a mass ratio of 1.5:2.0:1.2:86.4:8.9 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Comparative example 6

Except for in <Preparation of negative electrode binder> and <Preparation of electrolyte>, adjusting the type of negative electrode binder and the mass percentage of each component in the electrolyte base solvent as shown in Table 1, with the mass percentage of the lithium salt unchanged, the rest was the same as in Example 1.

<Preparation of negative electrode binder>

The solutes acrylonitrile, methyl methacrylate, butyl acrylate, styrene, and butadiene were mixed in a mass ratio of 1.7:1.8:1.0:86.6:8.9 in a cyclohexane solvent, with a mass ratio of solute to solvent of 1:9. Based on the total mass of solute and solvent, 0.5% ammonium persulfate initiator and 1% cationic emulsifier amide sulfonate were added, and emulsion polymerization was performed to obtain a styrene-butadiene rubber SBR emulsion, with a stirring speed of 500 rpm, a reaction temperature of 60°C, and a reaction time of 14 h. Gel separation was performed to obtain the negative electrode binder.

Comparative examples 7 to 8

Except for in <Preparation of electrolyte>, adjusting the mass percentage of each component in the electrolyte base solvent as shown in Table 1, with the mass percentage of the lithium salt unchanged, the rest was the same as in Example 14. The preparation parameters and performance parameters for each example and Comparative example are shown in Table 1.

**Table 1**

| | x+y (%) | x (%) | y (%) | Mass percentage of FEC (%) | High-kinetic solvent | Mass percentage of high-kinetic solvent (%) | Other compounds | Mass percentages of other compounds (%) | Electrolyte conductivity (mS/cm) | Negative electrode binder pyrolysis components after PY-GCMS testing | 25°C cycle swelling rate (%) | 25°C 0.2C capacity retention rate (%) | 25°C 1C capacity retention rate (%) | 25°C cycle capacity loss (%) | 80°C high-temperature storage swelling rate (%) |
|---|---|---|---|---|---|---|---|---|---|---|---|---|---|---|---|
| Example 1 | 17.1 | 16.5 | 0.6 | 0.3 | EP+PP+DEC | 15.8+23.6+7.9 | PC+EC+PS+succinonitrile +adiponitrile+ethylene glycol diethyl cyanide ether+1,3,6-hexanetricarbonitrile | 18.4+9.6+2.6+1.1+1.9+0.4+5.9 | 9.10 | acrylonitrile/styrene/isooctyl acrylate/isooctyl methacrylate=3.4%/80.1%/15.0%/1.5% | 10.0 | 83.0 | 76.5 | 6.5 | 0.4 |
| Example 2 | 20.2 | 16.5 | 3.7 | 1.8 | EP+PP+DEC | 15.8+23.6+7.9 | PC+EC+PS+succinonitrile +adiponitrile+ethylene glycol diethyl cyanide ether+1,3,6-hexanetricarbonitrile | 18.4+9.6+2.6+1.1+1.9+0.4+4.4 | 9.10 | acrylonitrile/styrene/isooctyl acrylate/isooctyl methacrylate=3.4%/80.1%/15.0%/1.5% | 9.5 | 84.3 | 77.1 | 7.2 | 2.6 |
| Example 3 | 21.5 | 16.5 | 5.0 | 2.4 | EP+PP+DEC | 15.8+23.6+7.9 | PC+EC+PS+succinonitrile +adiponitrile+ethylene glycol diethyl cyanide ether+1,3,6-hexanetricarbonitrile | 18.4+9.6+2.6+1.1+1.9+0.4+3.8 | 9.10 | acrylonitrile/styrene/isooctyl acrylate/isooctyl methacrylate=3.4%/80.1%/15.0%/1.5% | 9.5 | 84.1 | 78.0 | 6.1 | 3.6 |
| Example 4 | 24.8 | 16.5 | 8.3 | 3.9 | EP+PP+DEC | 15.8+23.6+7.9 | PC+EC+PS+succinonitrile +adiponitrile+ethylene glycol diethyl cyanide ether+1,3,6-hexanetricarbonitrile | 18.4+9.6+2.6+1.1+1.9+0.4+2.3 | 9.10 | acrylonitrile/styrene/isooctyl acrylate/isooctyl methacrylate=3.4%/80.1%/15.0%/1.5% | 9.0 | 85.0 | 79.0 | 6.0 | 6.0 |
| Example 5 | 27.6 | 16.5 | 11.1 | 5.3 | EP+PP+DEC | 15.8+23.6+7.9 | PC+EC+PS+succinonitrile +adiponitrile+ethylene glycol diethyl cyanide ether+1,3,6-hexanetricarbonitrile | 18.4+9.6+2.6+1.1+1.9+0.4+0.9 | 9.10 | acrylonitrile/styrene/isooctyl acrylate/isooctyl methacrylate=3.4%/80.1%/15.0%/1.5% | 9.0 | 85.0 | 80.0 | 5.0 | 7.9 |

| | x+y (%) | x (%) | y (%) | Mass percentage of FEC (%) | High-kinetic solvent | Mass percentage of high-kinetic solvent (%) | Other compounds | Mass percentages of other compounds (%) | Electrolyte conductivity (mS/cm) | Negative electrode binder pyrolysis components after PY-GCMS testing | 25°C cycle swelling rate (%) | 25°C 0.2C capacity retention rate (%) | 25°C 1C capacity retention rate (%) | 25°C cycle capacity loss (%) | 80°C high-temperature storage swelling rate (%) |
|---|---|---|---|---|---|---|---|---|---|---|---|---|---|---|---|
| Example 6 | 24.-8 | 16.-5 | 8.3 | 3.9 | EP+PP+DEC | 7.9+23.6+15.8 | PC+EC+PS+succinonitrile +adiponitrile+ethylene glycol diethyl cyanide ether+1,3,6-hexanetricarbonitrile | 18.4+9.6+2.6+1.1+1.9+0.4+2.3 | 8.60 | acrylonitrile/styrene/isooctyl acrylate/isooctyl methacrylate=3.4%/80.1%/15.0%/1.5% | 9.0 | 85.0 | 80.0 | 5.0 | 6.0 |
| Example 7 | 23.-5 | 16.-5 | 7.0 | 3.3 | EP+PP+DEC | 7.9+23.6+15.8 | PC+EC+PS+succinonitrile +adiponitrile+ethylene glycol diethyl cyanide ether+1,3,6-hexanetricarbonitrile | 18.4+9.6+2.6+1.1+1.9+0.4+2.9 | 8.60 | acrylonitrile/styrene/isooctyl acrylate/isooctyl methacrylate=3.4%/80.1%/15.0%/1.5% | 9.0 | 85.0 | 79.0 | 6.0 | 5.0 |
| Example 8 | 21.-2 | 16.-5 | 4.7 | 2.2 | EP+PP+DEC | 7.9+23.6+15.8 | PC+EC+PS+succinonitrile +adiponitrile+ethylene glycol diethyl cyanide ether+1,3,6-hexanetricarbonitrile | 18.4+9.6+2.6+1.1+1.9+0.4+4.0 | 8.60 | acrylonitrile/styrene/isooctyl acrylate/isooctyl methacrylate=3.4%/80.1%/15.0%/1.5% | 9.5 | 85.0 | 78.0 | 7.0 | 3.4 |
| Example 9 | 21.-2 | 16.-5 | 4.7 | 2.4 | EP+PP | 9.6+41.1 | PC+EC+PS+succinonitrile +adiponitrile+ethylene glycol diethyl cyanide ether+1,3,6-hexanetricarbonitrile | 18.4+9.6+2.6+1.1+1.9+0.4+0.4 | 9.75 | acrylonitrile/styrene/isooctyl acrylate/isooctyl methacrylate=3.4%/80.1%/15.0%/1.5% | 10.0 | 84.0 | 77.0 | 7.0 | 3.3 |
| Example 10 | 21.-2 | 16.-5 | 4.7 | 2.0 | EP+PP | 31.5+11.4 | PC+EC+PS+succinonitrile +adiponitrile+ethylene glycol diethyl cyanide ether+1,3,6-hexanetricarbonitrile | 18.4+9.6+2.6+1.1+1.9+0.4+8.6 | 9.35 | acrylonitrile/styrene/isooctyl acrylate/isooctyl methacrylate=3.4%/80.1%/15.0%/1.5% | 10.0 | 83.0 | 76.0 | 7.0 | 3.4 |

| | x+y (%) | x (%) | y (%) | Mass percentage of FEC (%) | High-kinetic solvent | Mass percentage of high-kinetic solvent (%) | Other compounds | Mass percentages of other compounds (%) | Electrolyte conductivity (mS/cm) | Negative electrode binder pyrolysis components after PY-GCMS testing | 25°C cycle swelling rate (%) | 25°C 0.2C capacity retention rate (%) | 25°C 1C capacity retention rate (%) | 25°C cycle capacity loss (%) | 80°C high-temperature storage swelling rate (%) |
|---|---|---|---|---|---|---|---|---|---|---|---|---|---|---|---|
| Example 11 | 27.7 | 16.5 | 11.2 | 4.8 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +5.8 | 9.35 | acrylonitrile/styrene/isooctyl acrylate/isooctyl methacrylate=3.4%/80.1%/15.0%/1.5% | 9.0 | 85.0 | 80.0 | 5.0 | 8.0 |
| Example 12 | 29.4 | 16.5 | 12.9 | 5.5 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +5.1 | 9.35 | acrylonitrile/styrene/isooctyl acrylate/isooctyl methacrylate=3.4%/80.1%/15.0%/1.5% | 8.5 | 85.5 | 81.0 | 4.5 | 9.2 |
| Example 13 | 17.0 | 16.6 | 0.4 | 0.2 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +10.4 | 9.35 | acrylonitrile/styrene/isooctyl acrylate/isooctyl methacrylate=3.3%/80.1%/15.0%/1.6% | 10.0 | 83.0 | 76.3 | 6.7 | 0.3 |
| Example 14 | 18.5 | 18.1 | 0.4 | 0.2 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +10.4 | 9.35 | acrylonitrile/styrene/isooctyl acrylate/isooctyl methacrylate=1.9%/80.0%/17.0%/1.1% | 9.5 | 84.4 | 77.0 | 7.4 | 0.3 |
| Example 15 | 23.3 | 22.9 | 0.4 | 0.2 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +10.4 | 9.35 | acrylonitrile/styrene/isooctyl acrylate=2.8%/74.3%/22.9% | 9.0 | 85.0 | 78.8 | 6.2 | 0.3 |

| | x+y (%) | x (%) | y (%) | Mass percentage of FEC (%) | High-kinetic solvent | Mass percentage of high-kinetic solvent (%) | Other compounds | Mass percentages of other compounds (%) | Electrolyte conductivity (mS/cm) | Negative electrode binder pyrolysis components after PY-GCMS testing | 25°C cycle swelling rate (%) | 25°C 0.2C capacity retention rate (%) | 25°C 1C capacity retention rate (%) | 25°C cycle capacity loss (%) | 80°C high-temperature storage swelling rate (%) |
|---|---|---|---|---|---|---|---|---|---|---|---|---|---|---|---|
| Example 16 | 35.-4 | 35.-0 | 0.4 | 0.2 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +10.4 | 9.35 | styrene/isooctyl acrylate/isooctyl methacrylate=64.98%/28.30%/6.72% | 8.5 | 85.5 | 81.3 | 4.2 | 0.3 |
| Example 17 | 27.-6 | 22.-9 | 4.7 | 2.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +8.6 | 9.35 | acrylonitrile/styrene/isooctyl acrylate=2.8%/74.3%/22.9% | 9.0 | 85.0 | 79.7 | 5.3 | 3.4 |
| Example 18 | 39.-7 | 35.-0 | 4.7 | 2.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +8.6 | 9.35 | styrene/isooctyl acrylate/isooctyl methacrylate=64.98%/28.30%/6.72% | 8.5 | 85.5 | 82.0 | 3.5 | 3.4 |
| Example 19 | 52.-7 | 48 | 4.7 | 2.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +8.6 | 9.35 | styrene/isooctyl acrylate/isooctyl methacrylate=52%/31.10%/16.9% | 8.5 | 85.7 | 82.2 | 3.5 | 3.1 |
| Example 20 | 18.-1 | 7.0 | 11.-1 | 5.3 | EP+PP+ DEC | 15.8+ 23.6+ 7.9 | PC+EC+PS+succinonitrile +adiponitrile+ethylene glycol diethyl cyanide ether+1,3,6-hexanetricarbonitrile | 18.4+9.6+2.6 +1.1+1.9+0.4 +0.9 | 9.10 | styrene/isooctyl acrylate/isooctyl methacrylate=92.98%/6.02%/1.00% | 10.0 | 84.1 | 77.7 | 6.4 | 7.9 |

| | x+y (%) | x (%) | y (%) | Mass percentage of FEC (%) | High-kinetic solvent | Mass percentage of high-kinetic solvent (%) | Other compounds | Mass percentages of other compounds (%) | Electrolyte conductivity (mS/cm) | Negative electrode binder pyrolysis components after PY-GCMS testing | 25°C cycle swelling rate (%) | 25°C 0.2C capacity retention rate (%) | 25°C 1C capacity retention rate (%) | 25°C cycle capacity loss (%) | 80°C high-temperature storage swelling rate (%) |
|---|---|---|---|---|---|---|---|---|---|---|---|---|---|---|---|
| Example 21 | 30.-5 | 16.-5 | 14.-0 | 6.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +4.6 | 9.35 | acrylonitrile/styrene/isooctyl acrylate/isooctyl methacrylate=3.4%/80.1%/15.0%/1.5% | 9.0 | 85.0 | 80.0 | 5.0 | 10.0 |
| Example 22 | 17.-0 | 3.0 | 14.-0 | 6.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +4.6 | 9.35 | butadiene/acrylonitrile/methyl methacrylate/styrene/butyl acrylate=8.9%/1.5%/2.0%/86.6%/1.0-% | 10.0 | 83.0 | 76.5 | 6.5 | 10.0 |
| Example 23 | 29.-3 | 18.-1 | 11.-2 | 4.8 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +5.8 | 9.35 | acrylonitrile/styrene/isooctyl acrylate/isooctyl methacrylate=1.9%/80.0%/17.0%/1.1% | 8.5 | 85.5 | 81 | 4.5 | 8.0 |
| Example 24 | 32.-1 | 18.-1 | 14.-0 | 6.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +4.6 | 9.35 | acrylonitrile/styrene/isooctyl acrylate/isooctyl methacrylate=1.9%/80.0%/17.0%/1.1% | 8.5 | 85.5 | 81.3 | 4.2 | 10.0 |
| Comparative example 1 | 16.-8 | 16.-5 | 0.3 | 0.2 | EP+PP | 9.6+ 41.1 | PC+EC+PS+succinonitrile +adiponitrile+ethylene glycol diethyl cyanide ether+1,3,6-hexanetricarbonitrile | 18.4+9.6+2.6 +1.1+1.9+0.4 +2.6 | 9.75 | acrylonitrile/styrene/isooctyl acrylate/isooctyl methacrylate=3.4%/80.1%/15.0%/1.5% | 10.5 | 83.0 | 74 | 9.0 | 0.2 |

| | x+y (%) | x (%) | y (%) | Mass percentage of FEC (%) | High-kinetic solvent | Mass percentage of high-kinetic solvent (%) | Other compounds | Mass percentages of other compounds (%) | Electrolyte conductivity (mS/cm) | Negative electrode binder pyrolysis components after PY-GCMS testing | 25°C cycle swelling rate (%) | 25°C 0.2C capacity retention rate (%) | 25°C 1C capacity retention rate (%) | 25°C cycle capacity loss (%) | 80°C high-temperature storage swelling rate (%) |
|---|---|---|---|---|---|---|---|---|---|---|---|---|---|---|---|
| Comparative example 2 | 16.9 | 16.5 | 0.4 | 0.2 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +10.4 | 9.35 | acrylonitrile/styrene/isooctyl acrylate/isooctyl methacrylate=3.4%/80.1%/15.0%/1.5% | 11.0 | 83.0 | 75.0 | 8.0 | 0.3 |
| Comparative example 3 | 16.9 | 16.5 | 0.4 | 0.2 | EP+PP+DEC | 15.8+ 23.6+ 7.9 | PC+EC+PS+succinonitrile +adiponitrile+ethylene glycol diethyl cyanide ether+1,3,6-hexanetricarbonitrile | 18.4+9.6+2.6 +1.1+1.9+0.4 +6.0 | 9.10 | acrylonitrile/styrene/isooctyl acrylate/isooctyl methacrylate=3.4%/80.1%/15.0%/1.5% | 10.5 | 83.0 | 75.0 | 8.0 | 0.3 |
| Comparative example 4 | 11.7 | 7.0 | 4.7 | 2.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +8.6 | 9.35 | styrene/isooctyl acrylate/isooctyl methacrylate=92.98%/6.02%/1.00% | 12.0 | 82.0 | 73.6 | 8.4 | 3.4 |
| Comparative example 5 | 14.3 | 3.2 | 11.1 | 5.3 | EP+PP+DEC | 15.8+ 23.6+ 7.9 | PC+EC+PS+succinonitrile +adiponitrile+ethylene glycol diethyl cyanide ether+1,3,6-hexanetricarbonitrile | 18.4+9.6+2.6 +1.1+1.9+0.4 +0.9 | 9.10 | butadiene/acrylonitrile/methyl methacrylate/styrene/butyl acrylate=8.9%/1.5%/2.0%/86.4%/1.2% | 11.5 | 82.2 | 73.9 | 8.3 | 7.9 |
| Comparative example 6 | 16.8 | 2.8 | 14.0 | 6.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +4.6 | 9.35 | butadiene/acrylonitrile/methyl methacrylate/styrene/butyl acrylate=8.9%/1.7%/1.8%/86.6%/1.0% | 15 (gas swelling) | 82.2 | 73.9 | 8.3 | 10.0 |

(continued)

| | x+y (%) | x (%) | y (%) | Mass percentage of FEC (%) | High-kinetic solvent | Mass percentage of high-kinetic solvent (%) | Other compounds | Mass percentages of other compounds (%) | Electrolyte conductivity (mS/cm) | Negative electrode binder pyrolysis components after PY-GCMS testing | 25°C cycle swelling rate (%) | 25°C 0.2C capacity retention rate (%) | 25°C 1C capacity retention rate (%) | 25°C cycle capacity loss (%) | 80°C high-temperature storage swelling rate (%) |
|---|---|---|---|---|---|---|---|---|---|---|---|---|---|---|---|
| Comparative example 7 | 18.-3 | 18.-1 | 0.2 | 0.1 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +10.5 | 9.35 | acrylonitrile/styrene/isooctyl acrylate/isooctyl methacrylate=1.9%/80.0%/17.0%/1.1% | 15 (gas swelling) | 84.4 | 77.0 | 7.4 | 0.1 |
| Comparative example 8 | 32.-2 | 18.-1 | 14.-1 | 6.0 | EP+PP | 31.5+ 11.4 | PC+EC+PS+succinonitrile +adiponitrile+ethylene glycol diethyl cyanide ether+1,3,6-hexanetricarbonitrile | 18.4+9.6+2.6 +1.1+1.9+0.4 +4.6 | 9.35 | acrylonitrile/styrene/isooctyl acrylate/isooctyl methacrylate=1.9%/80.0%/17.0%/1.1% | 8.5 | 85.5 | 81.3 | 4.2 | 15 (gas swelling) |

Note: 1. Taking the data of Example 1 in Table 1 as an example, the high-kinetic solvent is EP+PP+DEC, with a mass percentage of high-kinetic solvent (%) of 15.8+23.6+7.9, indicating that based on the mass of the electrolyte, the mass percentage of EP is 15.8%, the mass percentage of PP is 23.6%, and the mass percentage of DEC is 7.9%. The other compounds are PC+EC+PS+succinonitrile+adiponitrile+ethylene glycol diethyl cyanide ether+1,3,6-hexanetricarbonitrile, with a mass percentage of other compounds (%) 18.4+9.6+2.6+1.1+1.9+0.4+5.9, indicating that based on the mass of the electrolyte, the mass percentage of PC is 18.4%, the mass percentage of EC is 9.6%, the mass percentage of PS is 2.6%, the mass percentage of succinonitrile is 1.1%, the mass percentage of adiponitrile is 1.9%, the mass percentage of ethylene glycol diethyl cyanide ether is 0.4%, and the mass percentage of 1,3,6-hexanetricarbonitrile is 5.9%. After PY-GCMS testing, the pyrolysis components of the negative electrode binder are acrylonitrile/styrene/isooctyl acrylate/isooctyl methacrylate=3.4%/80.1%/15.0%/1.5%, indicating that based on the mass of the negative electrode binder, the mass percentage of acrylonitrile is 3.4%, the mass percentage of styrene is 80.1%, the mass percentage of isooctyl acrylate is 15.0%, and the mass percentage of isooctyl methacrylate is 1.5%. Examples 2 to 24 and Comparative examples 1 to 8 should be understood with reference to Example 1.

2. "Gas swelling" in Table 1 refers to the phenomenon of gas swelling in the lithium-ion secondary battery after undergoing the 25°C swelling and cycle test or the 80°C storage swelling test.

From Examples 1 to 20 and Comparative examples 1 to 5, it can be seen that when x and y simultaneously satisfy: $17\% \leq x + y \leq 53\%$ and y is from 0.4% to 14%, the electrolyte has high conductivity, and the electrochemical device exhibits low 25°C cycle swelling rate, low 25°C cycle capacity loss, low 80°C high-temperature storage swelling rate, and high 25°C 0.2C and 1C capacity retention rates. This indicates that the electrochemical device has minimal volume expansion and capacity fade during cycling in fast-charging systems, good cycle performance, and good high-temperature storage performance.

From Examples 14, 23 to 24, and Comparative examples 7 to 8, it can be seen that when x and y satisfy: $17\% \leq x + y \leq 53\%$, the electrolyte has high conductivity, but when y < 0.4%, the electrochemical device exhibits gas swelling after 25°C cycling, indicating poor cycle performance when y is too low; when y > 14%, the electrochemical device exhibits gas swelling after 80°C high-temperature storage, indicating poor high-temperature storage performance when y is too high. When y is from 0.4% to 14%, the electrochemical device exhibits low 25°C cycle swelling rate, low 25°C cycle capacity loss, low 80°C high-temperature storage swelling rate, and high 25°C 0.2C and 1C capacity retention rates. This indicates that the electrochemical device has minimal volume expansion and capacity fade during cycling in fast-charging systems, good cycle performance, and good high-temperature storage performance, achieving a balance between cycle performance and high-temperature storage performance.

The mass percentage x of ester substances in the negative electrode binder typically affects the cycle performance of the electrochemical device. From Examples 1 to 24, it can be seen that when the value of x is within the range of this application, the electrochemical device does not exhibit gas swelling after 25°C cycling, while having low 25°C cycle swelling rate, low 25°C cycle capacity loss, low 80°C high-temperature storage swelling rate, and high 25°C 0.2C and 1C capacity retention rates. This indicates that the electrochemical device has minimal volume expansion and capacity fade during cycling in fast-charging systems, good cycle performance, and good high-temperature storage performance.

The types of ester and non-ester substances in the negative electrode binder typically affect the cycle performance of the electrochemical device. From Examples 1 to 24, it can be seen that when the ester and non-ester substances in the negative electrode binder are within the range of this application, the electrochemical device exhibits low 25°C cycle swelling rate, low 25°C cycle capacity loss, low 80°C high-temperature storage swelling rate, and high 25°C 0.2C and 1C capacity retention rates. This indicates that the electrochemical device has minimal volume expansion and capacity fade during cycling in fast-charging systems, good cycle performance, and good high-temperature storage performance.

The above descriptions are only preferred embodiments of this application and are not intended to limit this application. Any modifications, equivalent substitutions, improvements, and the like, made within the spirit and principles of this application shall be included within the scope of protection of this application.

**Claims**

1. An electrochemical device comprising an electrode assembly and an electrolyte, wherein the electrode assembly comprises a negative electrode plate, the negative electrode plate comprising a negative electrode active material layer, the negative electrode active material layer comprising a negative electrode active material and a negative electrode binder, and the negative electrode binder comprising an ester substance and a non-ester substance, wherein based on a mass of the negative electrode binder, a mass percentage of the ester substance is x;

   the electrolyte comprises fluoroethylene carbonate and a high-kinetic solvent, the high-kinetic solvent comprising at least one of ethyl propionate, propyl propionate, or diethyl carbonate, wherein a ratio of a mass percentage of fluoroethylene carbonate to a mass percentage of the high-kinetic solvent in the electrolyte is y; and
   the electrochemical device satisfies: $17\% \leq x + y \leq 53\%$, y is from 0.4% to 14%, and based on a mass of the electrolyte, a mass percentage of fluoroethylene carbonate is from 0.1% to 10%.

2. The electrochemical device according to claim 1, wherein the ester substance comprises at least one of isooctyl acrylate, isooctyl methacrylate, 1,3-propane sultone, diisocyanate, polyethylene glycol dimethyl ether acetate, methyl methacrylate, 2-ethylhexyl methacrylate, butyl acrylate, or phenolphthalein alcohol containing an ester group; and the non-ester substance comprises at least one of butadiene, acrylonitrile, styrene, acrylic acid, hydroxymethyl cellulose, polyacrylic acid, or adiponitrile.

3. The electrochemical device according to claim 1, wherein the negative electrode binder comprises an acrylic substance, the acrylic substance comprising at least one of acrylic acid, acrylonitrile, isooctyl acrylate, isooctyl methacrylate, or butyl acrylate.

4. The electrochemical device according to claim 1, wherein x is from 3% to 48%.

5. The electrochemical device according to claim 1, wherein the electrochemical device satisfies at least one of the following:

   a) x is from 10% to 35%;
   b) y is from 3% to 13%;
   c) based on the mass of the electrolyte, a mass percentage of diethyl carbonate in the electrolyte is from 0% to 30%;
   d) based on a mass of the negative electrode active material layer, a mass percentage of the negative electrode binder is from 0.5% to 5%;
   e) a conductivity of the electrolyte is from 7 mS/cm to 11 mS/cm; and
   f)

$$17\% \leq x + y \leq 30\%.$$

6. The electrochemical device according to claim 1, wherein the electrolyte further comprises at least one of ethyl difluoroacetate, ethylene carbonate, propylene carbonate, 1,3-propane sultone, ethylene glycol diethyl cyanide ether, butylene carbonate, dimethyl carbonate, ethyl methyl carbonate, methyl propyl carbonate, methyl acetate, ethyl acetate, propyl acetate, methyl propionate, methyl butyrate, ethyl butyrate, $\gamma$-butyrolactone, $\delta$-valerolactone, acetonitrile, succinonitrile, adiponitrile, glutaronitrile, 1,3,6-hexanetricarbonitrile, trans-hexenedinitrile, ethylene glycol bis(propionitrile) ether, or hexafluorocyclotriphosphazene.

7. The electrochemical device according to claim 1, wherein the negative electrode binder comprises at least one of styrene-butadiene rubber, polyacrylic acid, polyvinyl acetate, or polyvinyl alcohol.

8. The electrochemical device according to claim 1, wherein the negative electrode active material layer further comprises a negative electrode conductive agent and a dispersant, and based on a mass of the negative electrode active material layer, a mass percentage of the negative electrode active material is from 88% to 99%, a mass percentage of the negative electrode conductive agent is from 0% to 2%, and a mass percentage of the dispersant is from 0.5% to 5%.

9. The electrochemical device according to claim 8, wherein the negative electrode active material comprises at least one of natural graphite, artificial graphite, lithium titanate, hard carbon, nano-silicon, silicon-carbon, or silicon-oxygen; the negative electrode conductive agent comprises at least one of conductive carbon spheres, acetylene black, conductive carbon black, Ketjen black, single-walled carbon nanotubes, multi-walled carbon nanotubes, nano-carbon fibers, graphene, or conductive graphite sheets; and the dispersant comprises at least one of lithium carboxymethyl cellulose, sodium carboxymethyl cellulose, or modified carboxymethyl cellulose.

10. The electrochemical device according to claim 1, wherein the negative electrode active material comprises artificial graphite, wherein a ratio of a D-peak intensity to a G-peak intensity of the artificial graphite, as measured by Raman spectroscopy, is from 0.1 to 0.6.

11. An electronic device comprising the electrochemical device according to any one of claims 1 to 10.

# EP 4 738 521 A1

**INTERNATIONAL SEARCH REPORT**

| International application No. |
|---|
| **PCT/CN2024/094725** |

| A. | CLASSIFICATION OF SUBJECT MATTER |
|---|---|

H01M10/058(2010.01)i; H01M10/0525(2010.01)i; H01M4/62(2006.01)i; H01M10/0569(2010.01)i; H01M10/0567(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 宁德, 时代新能源, 负极, 负电极, 粘结剂, 粘合剂, 黏结剂, 黏合剂, 氟代碳酸乙烯酯, 丙酸乙酯, 丙酸丙酯, 碳酸二乙酯, 丙烯酸酯, 丙烷磺内酯, 二异氰酸酯, 醋酸酯, 酯基的酚酞醇, 丁二烯, 丙烯腈, 苯乙烯, 丙烯酸, 羟甲基纤维素, 聚丙烯酸, 己二腈, FEC, EP, PP, DEC, electrode, binder, adhesive, vinyl fluorocarbonate, ethyl propionate, propyl propionate, diethyl carbonate, acrylate, butadiene, acrylonitrile, styrene, acrylic acid, hydroxymethyl cellulose, polyacrylic acid, adipdinitrile

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116864816 A (NINGDE AMPEREX TECHNOLOGY LTD.) 10 October 2023 (2023-10-10) description, paragraphs [0003]-[0171] | 1-11 |
| X | CN 111969250 A (SHENZHEN YOUBANGDI TECHNOLOGY CO., LTD.) 20 November 2020 (2020-11-20) description, paragraphs [0004]-[0093] | 1-11 |
| Y | CN 112736247 A (GUANGZHOU AUTOMOBILE GROUP CO., LTD.) 30 April 2021 (2021-04-30) description, paragraphs [0007]-[0075] | 1-11 |
| Y | CN 114287078 A (NINGDE AMPEREX TECHNOLOGY LTD.) 05 April 2022 (2022-04-05) description, paragraphs [0004]-[0145] | 1-11 |
| A | KR 20080018732 A (LG CHEMICAL, LTD.) 28 February 2008 (2008-02-28) entire document | 1-11 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 July 2024** | **23 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

24

EP 4 738 521 A1

## INTERNATIONAL SEARCH REPORT
### Information on patent family members

International application No.

**PCT/CN2024/094725**

| Patent document cited in search report | | | Publication date (day/month/year) | Patent family member(s) | | | Publication date (day/month/year) |
|---|---|---|---|---|---|---|---|
| CN | 116864816 | A | 10 October 2023 | None | | | |
| CN | 111969250 | A | 20 November 2020 | None | | | |
| CN | 112736247 | A | 30 April 2021 | None | | | |
| CN | 114287078 | A | 05 April 2022 | CN | 114287078 | B | 15 September 2023 |
| KR | 20080018732 | A | 28 February 2008 | KR | 100969130 | B1 | 07 July 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310768103